# EUROPÄISCHE PATENTANMELDUNG

(11) **EP 2 815 954 A1**
(43) Veröffentlichungstag der Anmeldung: **24.12.2014**
(21) Anmeldenummer: 14172638.0
(22) Anmeldetag: 17.06.2014
(51) Int. Cl.: B62K 19/32, B62J 99/00

(54) **Vorrichtung zum Einführen wenigstens eines längserstreckten technischen Funktionsteils in einen Rahmenabschnitt eines Fahrzeuges**

(30) Priorität: 19.06.2013 DE 202013005555 U
(71) Anmelder: Derby Cycle Werke GmbH, 49661 Cloppenburg (DE)
(72) Erfinder: Pöss, Mario, 70176 Stuttgart (DE)
(74) Vertreter: Jabbusch, Matthias

(57) **Zusammenfassung**

Bei einer Vorrichtung zum Einführen wenigstens eines längserstreckten technischen Funktionsteils in einen Rahmenabschnitt eines Fahrzeuges, insbesondere eines Fahrrades, umfassend einen mit einem Durchbruch des Rahmenabschnittes in Anlage zu bringenden Einsatzabschnitt, durch den das Funktionsteil hindurchführbar ist, ist vorgesehen, dass an den Einsatzabschnitt (6) wenigstens ein längserstreckter Aufnahmeabschnitt (9) für das Funktionsteil (7) angesetzt ist.

Mit dieser Vorrichtung ist ein Halten bzw. Führen des technischen Funktionsteils bei seinem Einführen in einen Rahmenabschnitt ermöglicht.

## Beschreibung

Die Erfindung betrifft eine Vorrichtung zum Einführen wenigstens eines längserstreckten technischen Funktionsteils in einen Rahmenabschnitt eines Fahrzeuges, insbesondere eines Fahrrades, umfassend einen mit einem Durchbruch des Rahmenabschnitts in Anlage zu bringenden Einsatzabschnitt, durch den das Funktionsteil hindurchführbar ist.

Fahrzeuge mit Rahmenabschnitten, also mit Rahmen, können zwei- und mehrspurige Fahrzeuge sein. Fahrräder, Motorräder und Mopeds sowie auch vierrädrige mit Muskelkraft betriebene Fahrzeuge. Derartige Fahrzeuge haben technische Einrichtungen, wie Schaltungen und/oder Beleuchtungen, diese sind mit längserstreckten technischen Funktionsteilen miteinander sowie mit anderen Bauteilen verbunden. Die längserstreckten technischen Funktionsteile können dabei Bowdenzüge für Bremsen oder Schaltungen oder auch Kabel für Beleuchtungen sein.

Im Stand der Technik ist bereits vorgeschlagen worden, derartige Funktionsteile innerhalb von Rahmen zu verlegen, dort sind sie gegen Staub und Verschmutzung geschützt. Da die technischen Funktionsteile Bauelemente außerhalb des Rahmens miteinander zu verbinden haben, beispielsweise die Griffe einer Bremse, ist es erforderlich, die Funktionsteile in einen Rahmen hineinzuführen und aus diesem herauszuführen.

Im Stand der Technik sind bereits Durchbrüche in Rahmenabschnitte vorgeschlagen worden, durch die die Funktionsteile eingeführt werden können. Dabei kann ein Einsatzabschnitt, beispielsweise ein O-Ring, vorgesehen sein, durch den das Funktionsteil hindurchgeführt wird. Der Einsatzabschnitt soll den Eintritt des Funktionsteils in das Innere des Rahmens abdichten, damit nicht Schmutz und Feuchtigkeit in das Rahmeninnere eintreten.

Handelt es sich bei dem Fahrzeug um ein Fahrrad, so fallen im Bereich des Lenkers eine Reihe von technischen Funktionsteilen an, nämlich Bowdenzüge für Bremsen sowie für Schaltungskomponenten. Diese werden regelmäßig im Bereich des Steuerkopfes des Fahrradrahmens in diesen eingeführt, dabei tritt jedoch das Problem auf, dass im Steuerkopf des Fahrradrahmens der Gabelschaft angeordnet ist. Dort eingeführte Bowdenzüge können an dem Gabelschaft scheuern, sie können dabei beschädigt werden und auch das Lenken des Fahrrades beeinflussen.

Der Erfindung liegt daher die Aufgabe zugrunde, eine Vorrichtung der eingangs genannten Gattung aufzuzeigen, mit der ein Halten bzw. Führen des technischen Funktionsteils bei seinem Einführen in einen Rahmenabschnitt ermöglicht ist.

Diese Aufgabe ist erfindungsgemäß dadurch gelöst, dass an dem Einsatzabschnitt wenigstens ein längserstreckter Aufnahmeabschnitt für das Funktionsteil angesetzt ist.

Die erfindungsgemäße Vorrichtung weist einen Einsatzabschnitt ähnlich dem Stand der Technik auf. Dieser wird in der Oberfläche des Rahmenabschnittes einem Durchbruch des Rahmenabschnittes zugeordnet, durch den Einsatzabschnitt kann das Funktionsteil hindurch in das Innere des Rahmenabschnitts eintreten. Erfindungsgemäß tritt das technische Funktionsteil dann aber nicht in einen freien Raum innerhalb des Rahmenabschnittes ein, sondern in den Aufnahmeabschnitt. Dieser ist erfindungsgemäß an den Einsatzabschnitt angesetzt, er nimmt das Funktionsteil auf. Vorteilhaft ist damit ein Führen des Funktionsteils ermöglicht, beispielsweise an einem Gabelschaft vorbei. In das Rahmeninnere geführte Funktionsteile kommen dann mit anderen Bauteilen innerhalb des Rahmens nicht in Kontakt, sie bleiben unverletzt und damit entsprechend lange haltbar.

Nach einer ersten Weiterbildung der Erfindung ist vorgesehen, dass Einsatzabschnitt und Aufnahmeabschnitt ein einstückiges Formteil sind, beispielsweise aus Kunststoff gefertigt. Damit ist eine einfache Bauweise für dieses Formteil gegeben, es kann unter Einsatz geringer Kosten hergestellt werden.

Eine nächste Weiterbildung der Erfindung sieht vor, dass Einsatzabschnitt und Aufnahmeabschnitt mehrere Kanäle zum Durchführen von Funktionsteilen, wie Bowdenzüge, haben. Für jedes Funktionsteil kann ein Kanal vorgesehen sein, um dieses aufzunehmen. Der längserstreckte Aufnahmeabschnitt hat dadurch auch längserstreckte Kanäle, diese können beispielsweise parallel zueinander angeordnet sein, wenn mehrere Funktionsteile in die gleiche Richtung zu führen sind. Die Funktionsteile sind voneinander getrennt und jeweils von Abschnitten des Aufnahmeabschnittes umgeben, so dass sie nicht mit anderen Bauteilen innerhalb des Rahmenabschnittes in Kontakt geraten können.

Nach einer nächsten Weiterbildung der Erfindung ist vorgesehen, dass der Aufnahmeabschnitt aus dem Rahmenabschnitt herausgeführte Bereiche hat. Die Funktionsteile werden über den Einsatzabschnitt in den Aufnahmeabschnitt eingeführt. Durch diesen verlaufen sie, dabei können sie mit dem Aufnahmeabschnitt auch aus dem Rahmenabschnitt herausgeführt werden, in den sie eingeführt wurden. Dieser Rahmenabschnitt kann beispielsweise ein Steuerkopf sein, an den andere Rahmenabschnitte, beispielsweise ein Oberrohr und/oder ein Unterrohr mit Muffen oder Verschweißung oder auf andere Weise angesetzt sind. In die offenen Enden dieser Rohre sind die Funktionsteile einzufügen. Dazu kann der Aufnahmeabschnitt aus dem ersten Rahmenabschnitt, also dem Steuerkopf, vorstehen, er ist dann ein Stück weit beispielsweise in ein Oberrohr eingeführt. Damit gelingt ein Führen der Funktionsteile über Ansatzbereiche zweier Rahmenabschnitte hinweg. Diese Ansatzbereiche können unter Umständen Kanten oder Grate aufweisen, welche an Funktionsteilen scheuern können. Mit der erfindungsgemäßen Vorrichtung werden sie über diese Bereiche hinweggeführt.

Zur weiteren Ausbildung der Erfindung ist noch vorgesehen, dass der Einsatzabschnitt plattenförmig ausgebildet ist, wobei seine Erstreckung größer als die Weite des Durchbruchs des Rahmens ist. Der Einsatzabschnitt kann sich während eines Einschiebens der Vorrichtung in einen Durchbruch im Rahmen auf die Rahmenaußenoberfläche auflegen. Er deckt damit den Durchbruch im Rahmen flächig ab. Im Einsatzabschnitt kann ein Befestigungsmittel zum Befestigen des Einsatzabschnittes am Rahmen angeordnet sein, beispielsweise ein Durchbruch, durch den eine Schraube hindurchführbar ist, welche in ein entsprechendes Gewinde im Rahmenabschnitt eingedreht wird.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht von Abschnitten eines Fahrradrahmens mit eingesetzter Vorderradgabel,
- Fig. 2:: eine Seitenansicht des Fahrradrahmens gemäß Fig. 1,
- Fig. 3:: eine teilweise geschnittene Seitenansicht des Fahrradrahmens gemäß Fig. 1 und
- Fig. 4:: eine Schnittansicht des Rahmens nach Fig. 1 .

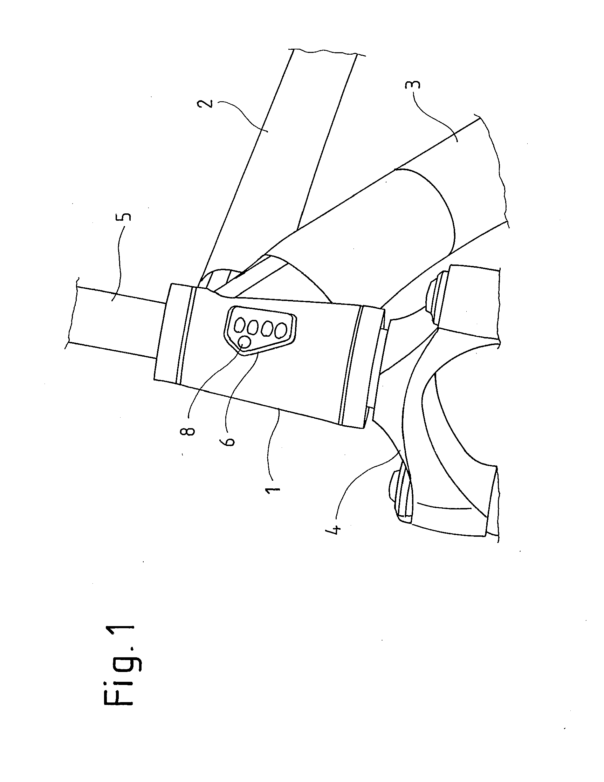

Der Fahrradrahmen in Fig. 1 ist mit seinem Steuerkopf 1, einem Oberrohr 2 sowie einem Unterrohr 3 gezeigt. In den Steuerkopf 1 ist eine Gabel 4 mit einem Gabelschaft 5 eingesetzt.

Auf der Oberfläche des Steuerkopfes 1 ist ein Einsatzabschnitt 6 der erfindungsgemäßen Vorrichtung zum Einführen von technischen Funktionsteilen 7 in den Steuerkopf 1 angeordnet.

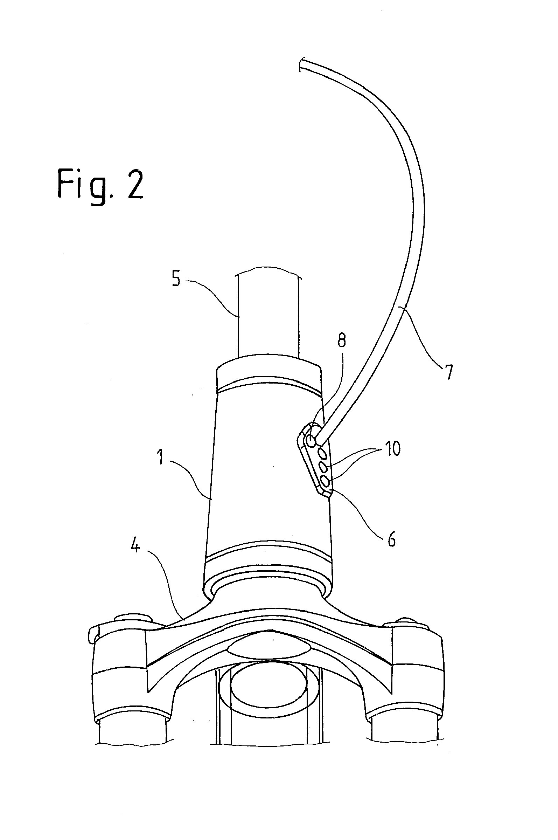

Fig. 2 zeigt, dass durch den Einsatzabschnitt 6 ein Funktionsteil 7, nämlich ein Bowdenzug, eingeführt ist. Das Funktionsteil 7 wird über den Einsatzabschnitt 6 in das Innere des Steuerkopfes 1 geführt. Der Einsatzabschnitt 6 ist dabei mit einer Schraube 8 am Steuerkopf 1 fixiert.

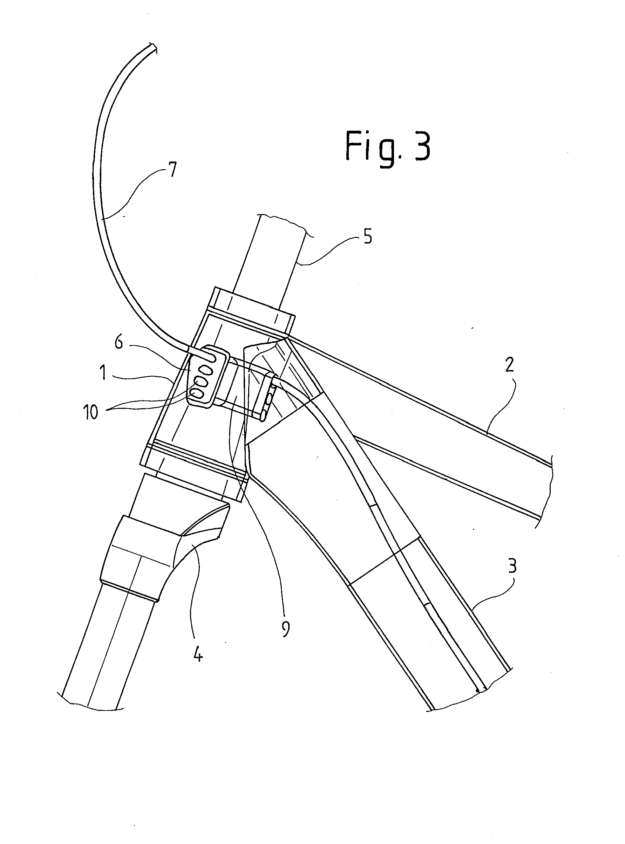

Fig. 3 zeigt, dass das Funktionsteil 7 durch den Steuerkopf 1 hindurch in das Unterrohr 3 verlaufend verlegt ist. Dabei wird das Funktionsteil 7 durch einen Aufnahmeabschnitt 9 geführt, wobei dieser Aufnahmeabschnitt 9 an den Einsatzabschnitt 6 angesetzt ist. Einsatzabschnitt 6 und Aufnahmeabschnitt 9 haben vier Kanäle 10 zum Aufnehmen von Funktionsteilen 7.

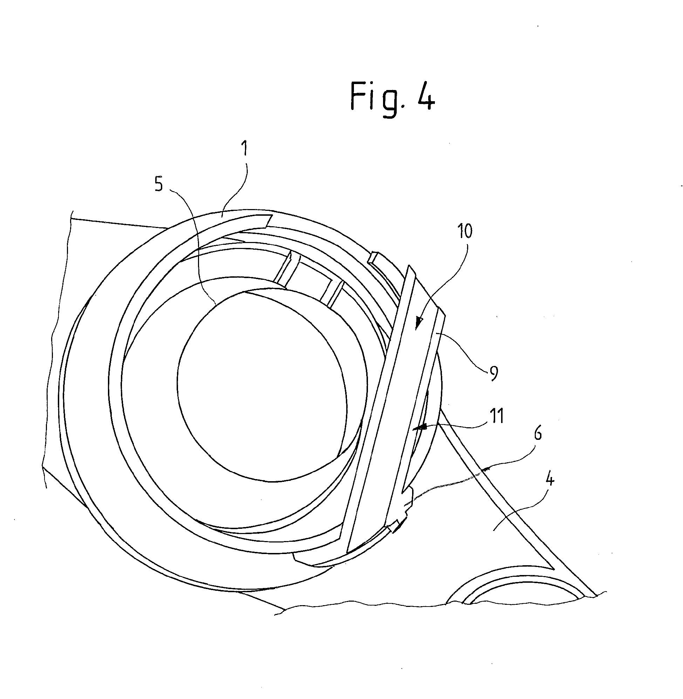

Fig. 4 zeigt das aus Einsatzabschnitt 6 und Aufnahmeabschnitt 9 gebildete einstückige Formteil 11. Ein Kanal 10 ist im Schnitt dargestellt. In Fig. 4 ist verdeutlicht, dass mit dem Aufnahmeabschnitt 9 ein Führen von technischen Funktionsteilen 7 am Gabelschaft 5 vorbei erfolgt. In den Kanälen 10 sind die Funktionsteile 7 gegenüber dem Gabelschaft 5 mechanisch abgeschirmt.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Vorrichtung zum Einführen wenigstens eines längserstreckten technischen Funktionsteils in einen Rahmenabschnitt eines Fahrzeuges, insbesondere eines Fahrrades, umfassend einen mit einem Durchbruch des Rahmenabschnittes in Anlage zu bringenden Einsatzabschnitt, durch den das Funktionsteil hindurchführbar ist,
**dadurch gekennzeichnet,**
**dass** an den Einsatzabschnitt (6) wenigstens ein längserstreckter Aufnahmeabschnitt (9) für das Funktionsteil (7) angesetzt ist.

2. Vorrichtung nach Anspruch 1, **dadurch gekennzeichnet, dass** Einsatzabschnitt (6) und Aufnahmeabschnitt (9) ein einstückiges Formteil (11) sind.

3. Vorrichtung nach Anspruch 2, **dadurch gekennzeichnet, dass** das Formteil (11) aus Kunststoff gefertigt ist.

4. Vorrichtung nach einem der vorhergehenden Ansprüche, **dadurch gekennzeichnet, dass** Einsatzabschnitt (6) und Aufnahmeabschnitt (9) mehrere Kanäle (10) zum Hindurchführen von Funktionsteilen (7), wie Bowdenzügen, haben.

5. Vorrichtung nach einem der vorhergehenden Ansprüche, **dadurch gekennzeichnet, dass** der Aufnahmeabschnitt (9) aus dem Rahmenabschnitt herausgeführte Bereiche hat.

6. Vorrichtung nach einem der vorhergehenden Ansprüche, **dadurch gekennzeichnet, dass** der Einsatzabschnitt (6) plattenförmig ausgebildet ist, wobei seine Erstreckung größer als die Weite des Durchbruches des Rahmenabschnittes ist.

7. Vorrichtung nach Anspruch 6, **dadurch gekennzeichnet, dass** dem plattenförmigen Einsatzabschnitt (6) zumindest ein Befestigungsmittel zum Befestigen des Einsatzabschnittest (6) am Rahmenabschnitt zugeordnet ist.

8. Vorrichtung nach einem der vorhergehenden Ansprüche, **dadurch gekennzeichnet, dass** der Einsatzabschnitt (6) mit dem Steuerkopf (1) eines Fahrradrahmens in Anlage bringbar ist.
